# EUROPEAN PATENT SPECIFICATION

(11) **EP 2 052 974 B1**
(45) Date of publication and mention of the grant of the patent: **10.08.2011**
(21) Application number: 07425692.6
(22) Date of filing: 02.11.2007
(51) Int. Cl.: B65B 7/16, B65G 25/02, B65G 47/66, B65G 47/82

(54) **System for simultaneous sealing of at least three parallel tray lines**
Vorrichtung zum gleichzeitigen Versiegeln von zumindest drei parallelen Behälterlinien
Système pour le scellage simultané d'au moins trois lignes paralléles de barquettes

(30) Priority: 25.10.2007 IT MI20072058
(43) Date of publication of application: 29.04.2009
(73) Proprietor: G. MONDINI S.p.A., I-25033 Cologne Bresciano (Brescia) (IT)
(72) Inventor: Mondini, Giovanni, 25033 Cologne Bresciano (IT)
(74) Representative: Gandini, Claudio

(56) References cited:
- EP-A- 0 334 266
- AU-A- 4 141 068
- BE-A3- 1 015 963
- US-A- 3 757 961

## Description

Tray sealing machines, mainly used in the food sector and still on the market, are basically characterized by the presence of a sealing station before which a belt feeder has been installed, followed by a working table on which the tray to be sealed is delivered and transferred under the aforementioned sealing station by two tray-taking portions, facing each other and placed parallel i.e. sidewise the tray working table.

The tray-taking portion has the function to take the tray, transfer it to the working table of the sealing station, where it is lifted up, and specifically to the head of the sealing station or sealing head for sealing and being discharged through the same tray-taking portion, which extends over a belt position after the same.

Operation of these machines is based on the use of a sealing station, preceded by a working table placed between the belt feeder and the aforementioned sealing station or sealing head.

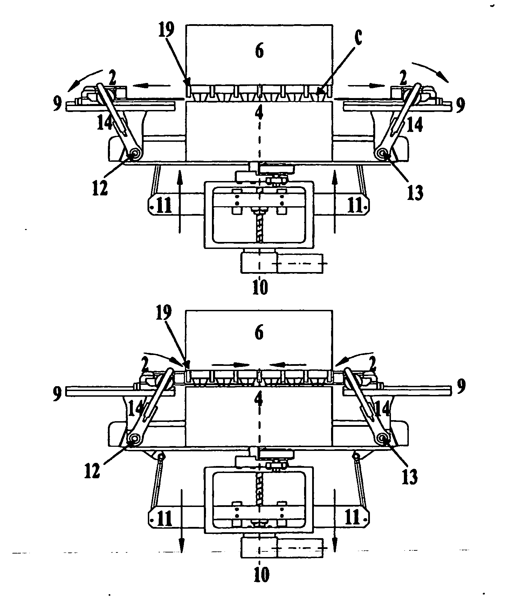

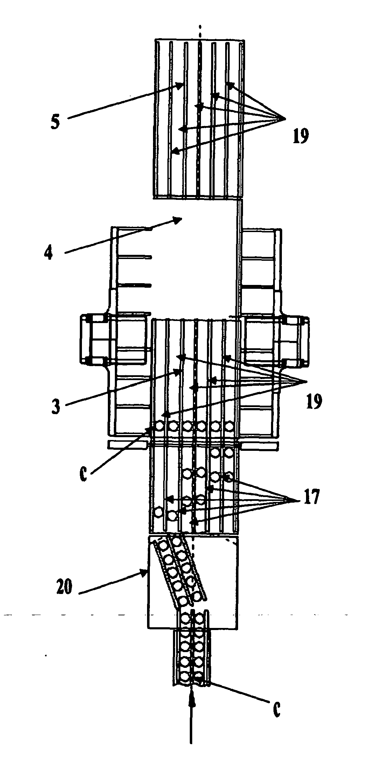

On the patent AU4141068Ais shown a trays system automatic machine, which can seal one tray singly (Figure 4 and 5), in case of presence of only one belt («conveyor of containers c», page 4 and Figures 1, 2, 3, 4, 6), provided with two parallel grip portion. In case of presence of two belts, provided with respectively two parallel grip portion put on the side of machine, is possible to seal two trays (Page 2 and Figure 6). Consequently, in the case shown on Figure 6 of Patent AU414168A, sealing of two trays is due to presence of two belts or paths of containers and respectively two grip portions for each belt, all of both belts can allow sealing of only one tray singly.

Finally, patent AU414168A discloses a system in which plurality of containers being arranged in two parallel paths (see Figure 6), but only one container for any path can be sealed.

An evolution, even if limited, of *sealing trays* machines has been obtained by extending the tray-taking portion longitudinally in order to allow the machine to take the last tray, when this is still positioned on the feeder belt and the one placed before, when this is still on the working table. In this case, one tray is taken from the working table and the second one from the belt feeder. The final result is the possibility to seal not more than two trays with the same grip portion.

These machines only have the disadvantage of a limited sealing simultaneously of maximum two trays or containers and the need for an operator responsible for the correct operation of the belt feeder in relation to the working table where the jaws or the tray-taking portion extend.

A remarkable improvement of these machines has been determined by Patent EP 0334266 B2 of which this invention is an evolution.

The basic concept of patent EP 0334266 B2, which has made the simultaneous sealing of different trays possible, is represented by the replacement of a moving element, an intermittent working **conveyor belt** to the aforementioned working table, which is placed directly before the sealing station.

The intermittence, consisting in alternated motions and stops, has allowed organizing one or many trays in one or maximum two ways or paths, on the first *conveyor belt* . In fact, the intermittence, through the aforesaid alternated motions and stops, makes it possible to subdivide - thanks to the aforementioned alternate motion - the surface of the belt into submultiples corresponding to the dimension of the trays to be sealed. Special detectors and the software control the movement of trays on the belt feeder to the first *conveyor belt ,* according to the quantity and the dimension of the same, as well as the following machine working phases.

The bigger the tray size, the less the number of trays that can be sealed at the same time. By contrast, a more limited dimension of the tray allows increasing the number of trays that can be simultaneously sealed.

The belt feed pitch, which means the portion of belt moving forward in the interval between two stops, is determined according to the dimension of trays.

Finally, the more smaller trays, the less the feed pitch determined by the intermittence of the first *conveyor belt*; in case bigger trays have to be sealed, the feed pitch increases longitudinally, whilst the number of trays, that can be simultaneously sealed, decreases.

The length of the first intermittent *conveyor belt* matches the length of the tray-taking portion and the longitudinal dimension of the working table of the sealing station that moves each tray up, towards the station itself , so as to allow the sealing process completion. The plate, after reaching the proper temperature so as to complete the sealing of trays, which are moved up for that purpose, is positioned on the head of the sealing station.

A plastic or another proper material film runs between the trays and the head of the sealing station, *as was just shown on aforementioned patent* AU4141068A*. This particular has already been used in the known technique.* After sealing, this film becomes the cover of each tray.

At the same time, the system regarding patent EP 0334266 B2 has the disadvantage of allowing the organization, on the first intermittent conveyor belt , of maximum two parallel tray lines. In fact, the tray-taking portion is essentially made up of two parallel jaws with longitudinal motion and can only move trays that are aligned longitudinally and positioned dose to the tray-taking portion.

One or more additional lines of trays, parallel to and in between the two already organized lines, positioned all along the intermittent *conveyor belt* , could not be taken by a tray-taking portion that is not designed to get in contact with the aforesaid additional tray lines, which occupy the intermediate space between the two external lines next to the tray-taking portions.

*The present invention consents considerable increase of tray number to be sealed at the same time, due to insertion of a third or more tray lines, on which interact rods , which extend transversally to the machine direction of movement.*

*This problem is solved with a system for simultaneous sealing of a plurality of trays according to the features of independent claim 1.*

*Finally, this invention includes* a system that, through the positioning of rods, which extend transversally to the machine direction of movement, *on the first conveyor belt* , on the working table of the sealing station and the following second *conveyor belt* , allows the extraction of many tray lines (minimum three and higher), organized in a longitudinal and parallel line, *and afterwards sealing of all trays moved onto sealing unit* . *Then for evacuation of all sealed trays, the second conveyor belt follows.*

Here below, a description of the invention under the preferred form.

*Here below, a description of the figures.*
**Figure 1** shows section of sealing unit, with rods **(1)** on carriage **(2)** and tray-taking portions **(8)** on back position. The linear motion of the carriages **(2)** installed on tray-taking portion **(8)** is determined by the presence of a single servomotor **(10)** that produces the alternate motion of a slide **(11)** that produces, in its tum, the rotation of two axles (12,13). On the rotating axles (12,13) two lever systems **(14)** are installed on each machine side respectively. These lever systems (14) are moved alternately in a clockwise an counter-clockwise sense and allow the linear motion of the carriage **(2).** Carriage **(2)** moves forward and backward along guide (9).
**Figure 2** shows rods **(1)** on carriage **(2)** and tray-taking portion **(8) the rods are** extended inside the sealing unit **(4, 6),** transversally to the machine direction of movement, to allow the sealing of more lines of trays.
**Figure 3** **and** **4** show the longitudinal movement of tray-taking portion (8).
**Figure 5, 6, 7, 8** show phases of trays taking, sealing and discharged, for final evacuation.

Trays are arranged on three lines, the number of which can be increased. The sealing station, that is not visible, is placed between the first **conveyor belt (3)** and the second conveyor belt (5). **Figure 9** is a top view of the machine showing the sealing head **(6)** (hidden) and, specifically, the longitudinal extension of the belt feeder with partitions **(17);** the first conveyor belt **(3)** with partition guides on an upper position **(19)** and the second conveyor belt **(5).** Upstream the belt feeder, a feeding line can be organized with a quantity of ways equal to that of the same belt feeder e.g. fewer, along which the trays **(c)** are filled, before the switch **(20).**

First, it is worth clarifying that the expression *longitudinal* means the machine sense of direction when running and on which basis it is possible to identify the lay-out and intermediate line of the machine, the conveyor belts (**3, 5**) and the working table (4) of the sealing unit (4,6). *crosswise means and is referred to movement of interact rods (1), which extend transversally to the machine direction of movement).*

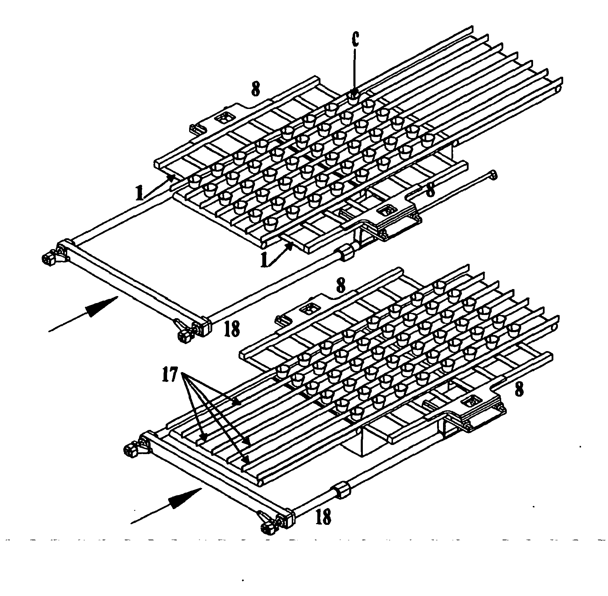

The machine is provided with a belt feeder (**7**) characterized by the presence of more ways or paths, delimited by first partition guides (**17**) as shown in ***Figure 2*****,** of which the width is determined by the dimensions of the trays to be sealed and the length is variable, followed by the first intermittent **conveyor belt (3).**

Belt feeder (**7**) comes with an aligner, which has already been used in the known technique. This expression refers to a software-controlled system that, during the passage from the belt feeder (**7**) to the first **conveyor belt (3),** moves trays onto this first conveyor belt (3) perfectly aligned in a transversal way as shown in ***Figure 4****.*

On the first intermittent **conveyor belt (3),** two tray-taking portions **(8)** interact sidewise; they are provided with a carriage **(2)** on which are installed some rods **(1)** that, after placing the trays on more parallel lines on the aforementioned first intermittent **conveyor belt (3)** provided with second partition guides (**19**) disposed on a upper position , extend till reaching the median line of the first **conveyor belt (3),** thus allowing the trays to be taken and transferred under the sealing station (14,6), made of a working table **(4)** and of the upper sealing head **(6),** provided with second partition guides (**19**), which perfectly correspond to the number first partition guides (**17**) in the first continuously operating belt feeder **(7).**

The longitudinal movement of the tray-taking portion **(8)** combined with the transversal motion, determined from carriage **(2)** to rods **(1),** makes it possible to take many tray lines from the first intermittent *conveyor belt* **(3),** move these lines to under the sealing station **(4, 6)** and, at the same time, extract the already sealed trays that are later put on a second non-stop motion *conveyor belt* **(5).**

In this way, it is possible to subdivide the area of the first *conveyor belt* **(3)** into submultiples, not only longitudinally but also transversally, making it possible to organize different longitudinal parallel lines of trays that can be transferred and sealed at the same time, thanks to the presence of the aforementioned rods **(1),** which operate transversally to the longitudinal motion of the *conveyor belt* **(3),** making it possible to move trays, even those that are positioned in the intermediate parallel lines, longitudinally on the aforementioned *conveyor belt* **(3).**

At the same time, the preceding rods **(1)** extend along the sealing station **(4, 6)** and, finally, along the second *conveyor belt* **(5),** following a non-stop or continuous motion, the function of which is performing the extraction of sealed trays.

The intermittent first *conveyor belt* **(3),** the second *conveyor belt* **(5)** and the sealing head **(6)** are equipped with second partition guides (19) disposed on an upper position . These guides (19) detect trays in the upper part, which substantially coincides with the upper edge where sealing occurs.

**Figure 9** is a top view of the machine showing the sealing head **(6)** (hidden) and, specifically, the longitudinal extension of the belt feeder (**7**) with first partition guides (**17**); the first *conveyor belt* **(3)** with second partition guides (19) on an upper position and the second *conveyor belt* **(5).** The working table of the sealing station **(4)** is not provided with partition guides, which are on the contrary positioned under the sealing head **(6)** as shown in **Figure 1****.**

If partition guides were positioned on the surface of *conveyor belts* **(*3*, *5*)** or the working table **(4)** of the sealing unit, rods **(1)** would not be able to extend up to the intermediate line because of the presence of a fixed obstacle.

This invention makes it possible to transfer trays that are in the parallel intermediate lines towards the station and move away from it.

The area of the first intermittent *conveyor belt* **(3)** can be designed so as to be subdivided into submultiples and have so many longitudinal and parallel tray lines as many transversal lines, in order to considerably increase the number of trays that can be sealed at the same time.

Equipment also includes two *grip portions or* tray-taking portions **(8),** which are the same and facing each other, placed parallel to the **conveyor belts (3, 5)** and to the sealing station working table **(4),** according to the well-known technique.

Whilst trays (c) are taken from the first intermittent **conveyor belt (3)** to be positioned on the working table (4) of the sealing station (4,6), the previous trays group, which is already under the sealing head, *after sealing* is moved to the second *conveyor belt* **(*5*)** for expulsion. Then, thanks to a motion that is linear and transversal to the sense of motion of the *conveyor belts* (**3**, ***5*)** determined by the carriage **(2)** positioned on each tray-taking portion **(8),** rods **(1)** run in the opposite direction of the previous phase, go back allowing the tray-taking portion **(8)** to move on the level of the first *conveyor belt* **(3)** and again, of the sealing station **(4, 6).** Then, the tray-taking portion **(8),** the carriage **(2)** and the rods **(1)** extend transversally.

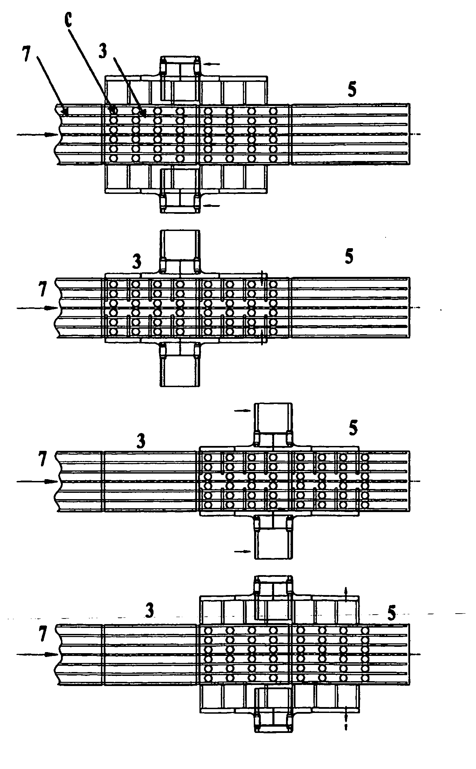

The taking and release motions are determined to allow grant the correct process completion and the sealed trays moving out, as shown in *Figure* 3.

Each carriage **(2)** positioned on a respective tray-taking portion **(8),** with linear motion and on which the fixed and removable rods **(1)** are placed, moves from *outside to inside* (see **Figure 1****)** until the rods reach the median line of the first intermittent *conveyor belt (3).*

Every tray-taking portion **(8)** moves longitudinally aver a shaft that is stiffly mounted on the frame **(18).**

The linear motion of the carriage **(2)** installed on every tray-taking portion **(8)** (see **Figure 1****)** is determined by the presence of a single servomotor **(10)** that produce the alternate motion of a slide (11) that produces, in its turn, the rotation of two axles (12,13). On the rotating axles (12,13) two lever systems **(14)** are installed on each machine side respectively. These lever systems (14) being moved alternately in a clockwise *and counter-clockwise sense* and allow the linear motion of the carriages **(2)**. Each Carriage **(2)** moves forward and backward along guide **(9)** as shown in ***Figure 1******.***

Carriage **(2)** comes with a fixed-and-removable rod **(1)** element so that - after trays (c) are organized on various parallel tray lines on the first intermittent **conveyor belt (3),** coming from belt feeder **(7)** provided with at least three ways or paths -, the tray-taking portion (8) extends along the aforementioned first *conveyor belt* **(3);** and the carriage **(2)** on which rods **(1)** are positioned extends as well along guide **(9),** determining the transversal extension of rods **(1)** on the first *conveyor belt* **(3)** between a tray (c) another , till the longitudinal median line of the first *conveyor belt* **(3).** In this way, trays **(c)** are moved onto the working table **(4)** of the sealing station (4,6) where trays are finally sealed and carried to the second non-stop motion ***conveyor belt* (*5*).**

The system composed of the tray-taking portion **(8)** on which a carriage **(2)** complete with rods **(1)** is positioned and moved on a guide **(9),** which determines an alternate linear motion, i.e. a forward motion *towards conveyor belts* and the sealing station (4,6), and *backwards,* allows the above mentioned rods **(1)** to be transversally introduced till the longitudinal median line of the first *conveyor belt* **(3),** on the area between one tray and the other.

Rods ***(1)*** can be provided with a forward movement up to reaching the median line of **conveyor belts (3, 5)** and the working table of the sealing unit **(4);** and with a backward movement based on a pneumatic electromechanical system complete with rigid or telescopic elements.

The system claimed as preferred on this invention is the electromechanical system, which, compared to the other systems, allows very limited dimensions of the tray-taking portion **(8)** complete with carriage **(2)** on which the rods **(1)** are positioned.

As above said, rods **(1)** are fixed as they are prearranged on the carriage **(2);** through the relevant alternate forwards and backwards motions, they introduce between the trays that are already organized into more parallel lines and, as stated, extend till the longitudinal median line of the first *conveyor belt* **(*3*).** The distance among rods **(*1*),** all along the carriage and therefore the tray-taking portion, varies according to the dimension and the number of the trays to be simultaneously sealed and already organized on various parallel lines on the aforementioned intermittent *conveyor belt* **(*3*).**

Once the various tray lines are organized on the first intermittent *conveyor belt **(3)*** complete with second partition guides disposed on a upper position in the same number as those installed on the belt feeder **(7),** the tray-taking portion **(8)** and the carriage **(2)** on which the rods are installed **(1),** *extend transversally* till the median line of the first *conveyor belt* **(*3*)** and reach the tray **(c)** taking position.

Upstream the belt feeder **(7),** a feeding line can be organized with a quantity of ways equal to that of the same belt feeder **(7),** e.g. fewer, along which the trays **(*c*)** are filled, before the switch **(d)** *belt feeder* (see **Figure *9*),** already being part of the state of the art, allowing the trays to be organized and transferred to various tracks, e.g. to the quantity of tracks present on the belt feeder **(7).**

The presence of switches **(20),** even if granting a high increase in production, allows the production line dimensions to be reduced.

This invention is therefore characterized by the presence of a belt feeder **(7)** on which the trays parallel lines are delimited by the presence of first partition guides (17), followed by the first intermittent *conveyor belt* **(3)** complete with second partition guides (19) disposed on a upper position where rods **(1)** interact and operate according to the system described, allowing the area to be also subdivided transversally and, therefore, all the trays **(*c*)** already organized into various parallel lines, under the sealing station, to be transferred.

## Claims

1. System for simultaneous sealing of a plurality of trays comprising :
- a belt feeder (7) being subdivided into at last three parallel paths by means of first partition guides (17) and an aligner;
- a first intermittent conveyor belt (3) equipped with second partition guides (19) disposed on an upper position, for arranging the trays (c) coming from the belt feeder (7) in various longitudinal and parallel tray lines on said intermittent conveyor belt (3), wherein two tray-taking portions (8) extend all along the said first intermittent conveyor belt (3);
- a sealing station (4, 6) comprising a working table (4) and an upper sealing head (6) equipped with second partition guides (19) that match the number of first partition guides (17) of the belt feeder (7);
- a second continuously moving conveyor belt (5) provided with second partition guides (19) disposed in an upper position;
- a tray transfer device for moving the plurality of trays being arranged at the tray-taking portion (8) longitudinally to the working table (4) of the sealing station (4, 6), the tray transfer device being provided with a single servomotor (10) that produces an alternate motion to a slide (11) that causes two axles (12, 13) to rotate on each machine side respectively, wherein on each one of the rotating axles (12, 13) a lever system (14) is installed, the lever system (14) being moved alternately in a clockwise and a counter-clockwise sense, thereby allowing a linear motion of two carriages (2) along respective guides (9), each carriage (2) being positioned on a respective tray-taking portion (8) and being provided with an element complete with fixed and removable rods (1), the linear motion of the two carriages enabling the said rods (1) to be transversally introduced between one tray (c) and the other till the longitudinal median line of the first intermittent conveyor belt (3).

2. System according to the first claim, **characterized in that** the belt feeder **(7)**, positioned before the first intermittent working *conveyor belt* **(3),** is continuously moving and
the various parallel paths the width of varies according to the dimension of the trays to be sealed, and is provided, at any path, with special pushers, which are connected to the
dragging chain, according to the known technique, and which allow the trays which follow each other to be spaced and moved ahead on every way.

3. System according to the first claim, **characterized in that**, according to the dimension of the surface of the first intermittent *conveyor belt* (3), various trays are organized into three or more parallel lines; these tray dimensions and quantity represent a submultiple of the surface of the intermittent *conveyor belt* (3).

4. System according to the first claim, **characterized in that** the fist intermittent *conveyor belt* (3) stops the motion, after organized the prefixed number of trays, for allowing the tray-taking portion **(8)** and the carriage **(2)** to extend the rods **(1)** till the median line of the first *conveyor belt **(3).***

5. System according to the first claim, **characterized in that** the tray-taking portion **(8)** length, which is equal and symmetric on both sides, on which is positioned the carriage **(2)** that allows the rod (1) linear motion, is double in relation to that of the first intermittent *conveyor belt* (3) and to that of the sealing station **(4, 6),** in order to allow the trays to be taken from the first intermittent *conveyor belt* **(3)** and to be transferred to the sealing station and, simultaneously, the taking of the already sealed
trays that are positioned on the working table **(4)** of the sealing station (4,6), to be then placed on the second continuously moving *conveyor belt* **(5),**

6. System according to the first claim, **characterized in that** the working table of which, after the sealing of trays, lowers to allow the insertion of rods (1) that make it possible to transfer sealed trays to the second non-stop or continuous motion *conveyor belt* (5).

7. System according to the first claim, **characterized in that** the belt feeder (7) length is variable and can therefore be equal or higher than those of the first intermittent conveyor belt (3) and of the following sealing station (4,6).

8. System according to the first claim, **characterized in that** the belt feeder (7) and the first intermittent *conveyor belt* (3) are operationally connected, i.e. some special sensors, which are coordinated by a software, determine the number and the position of trays to be organized on the first *conveyor belt* (3), according to their number and
dimension, then allowing the transfer to the sealing station (4,6).

## Patentansprüche

1. System zum gleichzeitigen Versiegeln einer Vielzahl von Schalen, bestehend aus:
- einem Bandförderer (7), der am Ende mit Hilfe von Trennschienen (17) und einem Aligner in drei parallele Spuren geteilt ist;
- einem ersten intermittierenden Förderband (3), ausgestattet mit zweiten Trennschienen (19) in einer oberen Position, um die Schalen (c), die vom Bandförderer aus ankommen (7), in mehreren parallelen, längs laufenden Boxenreihen auf dem genannten intermittierenden Förderband (3) anzuordnen, wobei sich zwei Boxen greifende Bereiche entlang des genannten ersten intermittierenden Förderband (3) erstrecken;
- einer Versiegelungsstation (4, 6), bestehend aus einem Arbeitstisch (4) und einem oberen Versiegelungskopf (6), der mit zweiten Trennschienen (19) ausgestattet ist, die der Anzahl der ersten Trennschienen (17) auf dem Bandförderer (7) entsprechen;
- Einem zweiten, sich konstant bewegenden Förderband (5) mit zweiten Trennschienen (19), die an einer oberen Position angeordnet sind;
- einem Schalenübergahegerät, um die Mehrzahl der Schalen, die an den Schalen greifenden Bereichen (8) angeordnet sind, in Längsrichtung zum Arbeitstisch (4) der Versiegelungsstation (4, 6) zu bewegen. Das Schalenübergabegerät verfügt über einen einzelnen Servomotor (10), der eine alternierende Bewegung zu einer Rutsche (11) produziert, und der zwei Achsen (12, 13) auf beiden Seiten der Maschine zum Rotieren bringt. Dabei ist auf einer der rotierenden Achsen (12, 13) ein Hebelsystem (14) installiert ist. Das Hebelsystem (14) wird abwechselnd im und gegen den Uhrzeigersinn bewegt und erlaubt **dadurch** eine lineare Bewegung von zwei Laufwagen (2) entlang entsprechenden Schienen (9). Jeder Laufwagen (2) ist auf einem entsprechenden Schalen greifenden Bereich (8) positioniert und ausgestattet mit einem Element, komplett mit festen und abnehmbaren Streben/Stangen (1). Die lineare Bewegung der zwei Laufwagen ermöglicht, dass die genannten Streben/Stangen transversal zwischen einer Box © und der anderen eingeführt werden, bis zur longitudinalen Mittellinie des ersten intermittierenden Förderbandes (3).

2. System gemäß der ersten Anforderung, charakterisiert **dadurch**, dass der Bandförderer (7), der vor dem ersten arbeitenden, intermittierenden Förderband (3) positioniert ist und dass bei den parallelen Spuren die Breite variiert, entsprechend den Abmessungen der zu versiegelnden Schalen, und ist auf jeder Spur mit speziellen Schiebern ausgestattet, die mit der Schleppkette verbunden sind, gemäß der bekannten Technik, und die es den aufeinander folgenden Schalen ermöglichen, voneinander getrennt und auf allen Wegen weiterbewegt zu we

3. System gemäß der ersten Anforderung, charakterisiert **dadurch**, dass entsprechend den Abmessungen der Oberfläche des ersten intermittierenden Förderbandes (3) mehrere Schalen in drei oder mehr parallelen Reihen angeordnet werden; diese Abmessungen und Mengen der Schalen stellen einen Teil der Oberfläche des intermittierenden Förderbandes (3) dar.

4. System gemäß der ersten Anforderung, charakterisiert **dadurch**, dass das erste intermittierende Förderband (3) stoppt, nachdem die vorbestimmte Anzahl von Boxen erreicht ist, um den Schalen greifenden Bereichen (8) und den Laufwagen (2) zu ermöglichen, die Streben (1) bis zur Mittellinie des ersten Förderbandes (3) auszufahren.

5. System gemäß der ersten Anforderung, charakterisiert **dadurch**, dass die Länge des Schalen greifenden Bereichs, der auf beiden Seiten gleich und symmetrisch ist und auf dem der Laufwagen (2) positioniert ist, der die lineare Bewegung der Streben ermöglicht, doppelt so groß ist, wie die des ersten intermittierenden Förderbandes (3) und die der Versiegelungsstation, um zu ermöglichen, dass die Schalen vom ersten intermittierenden Förderband (3) entnommen und an die Versiegelungsstation weitergegeben werden. Gleichzeitig werden die bereits versiegelten Schalen, die auf dem Arbeitstisch (4) der Versiegelungsstation (4, 6) abgelegt wurden, auf das zweite, sich konstant bewegende Förderband (5) weitergegeben werden.

6. System gemäß der ersten Anforderung, charakterisiert **dadurch**, dass der Arbeitstisch, auf dem die Schalen nach der Versiegelung abgelegt werden, sich absenkt, um die Einbringung der Streben (1) zu erlauben, die es ermöglichen, die versiegelten Schalen auf das zweite Non-Stopp-Band bzw. das sich konstant bewegende Förderbank (5) zu übergeben.

7. System gemäß der ersten Anforderung, charakterisiert **dadurch**, dass die Länge des Bandförderers (7) variabel ist und somit gleich der Länge oder länger ist, als das erste intermittierende Förderbank (3) und der nachfolgenden Station (4, 6)

8. System gemäß der ersten Anforderung, charakterisiert **dadurch**, dass der Bandförderer (7) und das erste intermittierende Förderband (3) operationell verbunden sind, d.h. einige spezielle Sensoren, die durch eine Software koordiniert werden, bestimmen die Anzahl und die Position der Schalen, die auf dem ersten Förderband (3) angeordnet werden, und zwar gemäß ihrer Anzahl und Abmessungen, und die dann die Übergabe an die Versiegelungsstation (4, 6) erlauben.

## Revendications

1. *installation pour le scellage simultané de différentes barquettes, composée de:*
- un distributeur à courroie **(7)** divisé en au moins trois voies parallèles grâce à des guides de division principaux **(17)** et à un aligneur;
- une première bande transporteuse intermittente **(3),** équipée de guides de division secondaires **(19)** situés dans une position supérieure, pour disposer les barquettes **(c)** provenant du distributeur à courroie **(7)** sur différentes rangées longitudinales et parallèles sur cette bande transporteuse **(3),** où deux postes de prise des barquettes **(8)** se trouvent sur cette première bande transporteuse intermittente **(3);**
- un poste de scellage **(4, 6),** comprenant une table de travail **(4)** et une tête de scellage supérieure **(6),** équipée de guides de division secondaires **(19),** correspondant en nombre aux guides de division principaux **(17)** du distributeur à courroie **(7)**;
- une deuxième bande transporteuse continue **(5)** pourvue de guides de division secondaires **(19)** situés dans une position supérieure;
- un dispositif de transfert pour les barquettes, pour déplacer les différentes barquettes disposées au poste de prise **(8)** longitudinalement vers la table de travail **(4)** du poste de scellage **(4, 6);** le dispositif de transfert des barquettes est équipé d'un seul servomoteur **(10)** qui produit un mouvement alterné sur une goulotte **(11),** causant la rotation de deux axes **(12, 13)** qui tournent respectivement sur chaque côté de la machine; sur chaque axe rotatif **(12, 13)** a été installé un système à levier **(14);** le système à levier **(14),** actionné de façon alternée dans le sens des aiguilles d'une montre et dans le sens inverse, permet donc un mouvement linéaire de deux chariots **(2)** le long des respectifs guidages **(9);** chaque chariot **(2)** a été positionné sur un poste de prise des barquettes **(8)** et est équipé d'un élément pourvu de petites tiges fixes et amovibles **(1);** le mouvement linéaire des deux chariots permet à ces petites tiges **(1)** d'être introduites transversalement entre une barquette **(c)** et celle successive, jusqu'à la ligne médiane longitudinale de la première bande transporteuse intermittente **(3).**

2. Installation décrite dans la première revendication, **caractérisée en ce que** le distributeur à courroie positionné avant la première *bande transporteuse* intermittente de travail **(3)** est actionné continuellement, possède différents parcours parallèles, la largeur de ces derniers varie en fonction des dimensions des barquettes qui doivent être scellées, et est équipé, sur chaque parcours, de pousseurs appropriés, connectés à la chaîne d'entraînement selon la technique connue, et permettant aux barquettes qui suivent de rester à une certaine distance les unes des autres et de se déplacer en avant sur chaque parcours.

3. Installation décrite dans la première revendication, **caractérisée en ce que**, selon les dimensions de la surface de la première *bande transporteuse* intermittente **(3),** différentes barquettes sont disposées sur trois rangées parallèles ou plus; les dimensions et la quantité de barquettes représentent un sous-multiple de la surface de la *bande transporteuse* intermittente **(3).**

4. Installation décrite dans la première revendication, **caractérisée en ce que** la première *bande transporteuse* intermittente **(3)** s'arrête après avoir disposé le nombre déterminé de barquettes, afin de permettre au poste **(8)** la prise des barquettes, et au chariot **(2)** d'allonger les petites tiges **(1)** jusqu'à la ligne médiane de la première *bande transporteuse* **(3)*.***

5. Installation décrite dans la première revendication, **caractérisée en ce que** la longueur du poste de prise des barquettes **(8),** qui est identique et symétrique sur les deux côtés, sur lequel est positionné le chariot **(2)** qui permet le mouvement linéaire des petites tiges **(1),** est double par rapport à celle de la première *bande transporteuse* intermittente **(3)** et à celle du poste de scellage **(4, 6),** afin de permettre la prise des barquettes de la première *bande transporteuse* intermittente **(3)** et leur transfert au poste de scellage et, simultanément, la prise des barquettes déjà scellées qui se trouvent sur la table de travail **(4)** du poste de scellage **(4, 6),** puis de les positionner sur le deuxième *tapis convoyeur* à mouvement continu **(5).**

6. Installation décrite dans la première revendication, **caractérisée en ce que** la table de travail, après le scellage des barquettes, s'abaisse afin de pouvoir introduire les petites tiges **(1),** qui permettent le transfert de ces barquettes scellées au deuxième *tapis convoyeur* à mouvement continu ou non-stop **(5).**

7. Installation décrite dans la première revendication, **caractérisée en ce que** la longueur du distributeur à courroie **(7)** est variable et peut par conséquent être identique ou supérieure à celle de la première *bande transporteuse* intermittente **(3)** et à celle du poste de scellage **(4, 6).**

8. Installation décrite dans la première revendication, **caractérisée en ce que** le distributeur à courroie **(7)** et la première *bande transporteuse* intermittente **(3)** sont connectés opérationnellement, à savoir la présence de certains capteurs spéciaux, gérés par un logiciel, qui déterminent le nombre et la position des barquettes qui doivent être disposées sur la première *bande transporteuse* **(3),** en fonction de leur quantité et de leurs dimensions, permettant ainsi leur transfert au poste de scellage **(4, 6).**
